# EUROPEAN PATENT SPECIFICATION

(11) **EP 2 282 172 B1**
(45) Date of publication and mention of the grant of the patent: **12.12.2012**
(21) Application number: 10007809.6
(22) Date of filing: 27.07.2010
(51) Int. Cl.: G01C 21/36, G06F 3/048

(54) **Method for operating navigation frame, navigation apparatus and computer program product**
Verfahren zum Betrieb eines Navigationsrahmens, Navigationsvorrichtung und Computerprogrammprodukt
Procédé de fonctionnement de cadre de navigation, appareil de navigation et produit de programme informatique

(30) Priority: 27.07.2009 US 228957 P; 31.12.2009 TW 98146647
(43) Date of publication of application: 09.02.2011
(73) Proprietor: HTC Corporation, Taoyuan County 330 (TW)
(72) Inventor: Lee, Yu-Cheng, Taoyuan City Taoyuan County 330 (TW)
(74) Representative: Carstens, Dirk Wilhelm

(56) References cited:
- DE-A1-102008 051 756
- US-A1- 2007 125 633
- US-A1- 2008 012 835
- US-A1- 2008 111 710
- US-A1- 2008 192 024
- US-A1- 2008 246 723

## Description

### BACKGROUND

The conventional navigation apparatus has a built-in smart electronic map and can execute functions of route planning and navigation. The user is only required to input a name or a coordinate of a destination to leave for, or directly select a particular location on the electronic map, and then the navigation apparatus automatically plans a navigation route based on the detected current location and a geographical location of the destination input by the user, and delivers a voice message to guide the user to the destination according to the planned navigation route.

In the process of the navigation software displaying the map in the full-screen mode, the mobile device may still receive an incoming call, a short message, an instant message, or an email from outside. At this time, if the user wants to response such external events, or needs to make a call or operate other functions of the mobile device, generally the user has to select a specific key to open a window, so as to perform operations within the window.

However, aforesaid method for opening or operating a window requires the user to watch the screen of the mobile device and select a function key on the screen, so as to complete an operation, which may cause inconvenience for the driver, and the distraction resulting from watching the screen may also jeopardize the safety of the driver. Therefore, there is a need to provide a method for operating the navigation apparatus for the user to perform operations on the navigation frame without watching the screen.

US 2008/0192024 discloses an operator distinguishing device which has a display part, an operation part provided in a touch panel arranged in front of the display part, and a control part. The touch panel has a plurality of electrodes for generating electrostatic capacity change when a hand of one of the operators approaches the touch panel, and the touch panel is arranged at a position where the touch-panel side hands of the operators need to approach to the touch panel from lateral side edge portions, which are at operator-to-operate sides, of the touch panel, respectively. The control part detects the electrostatic capacity change level generated by an approaching hand of the operator to distinguish the operator, who approaches the hand to the touch panel, from the other operator before the hand touches the touch panel.

In a method for multimode information input and/or adaptation of the display of a display and control device, input signals of different modality are detected which are supplied via the device to a voice recognition unit, thus initiating a desired function and/or display as an output signal, which are displayed n the device and/or output by voice output. DE 10 2008 051756 discloses touch and/or gesture input signals provided on or to the device for selection of an object intended for interaction and activation of the voice recognition unit and for the vocabulary which is provided for interaction to be restricted with the selection of the object and/or activation of the voice recognition unit as a function of the selected object, on the basis of which a voice command from the restricted vocabulary is added to the selected object as an information input and/or for adaptation of the display, via the voice recognition unit.

US 2008/012835 discloses a method and system for tracking a hover event on a digitizer sensor that treats hover and touch events differently, said method comprising configuring at least one parameter of the digitizer sensor for hover tracking; wherein the at least one parameter is configured differently than for touch tracking, and detecting a pattern of input signals from a plurality of conductive lines on the digitizer sensor defining a tracking point responsive to the pattern of hover input signals detected.

### SUMMARY

According to the present invention, a method for operating a navigation apparatus is provided as set forth in claim 1.

Moreover, the present invention provides a navigation apparatus as set forth in claim 7. Preferred embodiments of the present invention may be gathered from the dependent claims.

The present invention provides a method for operating a navigation apparatus in a navigation mode, which is suitable for a mobile device having a touch screen. In the method, a navigation frame is displayed on a touch screen when a navigation mode is entered. A sensitivity of the touch screen is adjusted to a preset sensitivity so as to detect an object appeared in front of the touch screen, in which the preset sensitivity is higher than an original sensitivity of the touch screen. When the touch screen detects the object, a window is operated according to a moving direction of the object relative to the touch screen.

In one example of the present invention, before displaying the navigation frame, the method further comprises detecting a current location of the mobile device and receiving a destination so as to plan a navigation route by using the current location of the mobile device as a start point and using the destination as an end point. Then, an electronic map nearby the navigation route is accessed and the navigation route is marked on the electronic map, so as to generate the navigation frame.

In one example of the present invention, the step of displaying the navigation frame comprises displaying in a full-screen mode.

In one example of the present invention, the step of adjusting the sensitivity of the touch screen to the preset sensitivity so as to detect the object in front of the touch screen comprises adjusting a signal-to-noise ratio (SNR) of the touch screen to enable the touch screen to detect the object in front of the touch screen.

In one example of the present invention, the step of detecting the object in front of the touch screen comprises detecting a capacitance of each of a plurality of touch points in the touch screen, and determining whether there is an object appeared in front of the touch screen according to a variance of the capacitance of each of the touch points.

In one example of the present invention, the step of determining whether there is an object appearing in front of the touch screen according to the variance of the capacitance of each of the touch points comprises comparing the variance of the capacitance of each of the touch points within a unit of time with a variance threshold, determining there is an object in front of the touch point of the touch screen if the variance of the touch point is larger than or equal to the variance threshold, and determining there is no object in front of the touch point of the touch screen if the variance of the touch point is less than the variance threshold.

In one example of the present invention, the step of displaying the window on the navigation frame according to the moving direction of the object relative to the touch screen comprises calculating a distance between the object in front of the touch point of the touch screen and the touch point according to the capacitance of each of the touch points and determining the moving direction of the object relative to touch screen according to a variance of the distance between the object and each of the touch points.

In one example of the present invention, the aforesaid object is a conductive object.

In one example of the present invention, when the object comprises moving in a first direction perpendicular to the touch screen, then the window is opened on the navigation frame.

According to the invention, after opening and displaying the window on the navigation frame, the method further comprises continuing to detect the object and determine the moving direction of the object relative to the touch screen, in which when the object is moved in the first direction perpendicular to the touch screen, a first operation function of the window is executed, and when the object is moved in a second direction parallel to the touch screen, then a second operation function of the window is executed.

In one example of the present invention, the aforesaid window is a menu having at least one item and one of the items in the window is marked as a current item.

In one example of the present invention, the aforesaid window is a menu having at least one item and only a current item in the at least one items is displayed in the window.

In one example of the present invention, the step of executing the first operation function comprises executing a function of a current item or displaying a submenu of the current item, and the step of executing the second operation function comprises switching the current item to a next item in the menu.

In one example of the present invention, the menu comprises a return item and an exit item and the step of executing the first operation function comprises executing the return item to return to a previous menu of the current menu or executing the exit item to close the menu.

In one example of the present invention, after displaying the window, the method further comprises accumulating a lasting time for displaying the window and comparing the same with a time threshold, in which when the lasting time exceeds the time threshold, the window is closed accordingly.

The present invention provides a navigation apparatus, which comprises a touch screen, a storage unit, and a processing unit. The touch screen has a sensitivity and is used for displaying a navigation frame. The storage unit is used for storing an electronic map. The processing unit is coupled to the touch screen and the storage unit, and is used for displaying the navigation frame on the touch screen when a navigation mode is entered and adjusting the sensitivity of the touch screen to a preset sensitivity to detect an object in front of the touch screen, in which the preset sensitivity is higher than an original sensitivity of the touch screen. When the touch screen detects the object, a window is displayed on the navigation frame according to a moving direction of the object relative to the touch screen.

The present invention further provides a computer program product which comprises instructions to be loaded into a mobile device to execute following steps. A navigation frame is displayed on a touch screen when a navigation mode is entered. A sensitivity of the touch screen is adjusted to a preset sensitivity so as to detect an object appearing in front of the touch screen, in which the preset sensitivity is higher than an original sensitivity of the touch screen. When the touch screen detects the object, a window is displayed on the navigation frame according to a moving direction of the object relative to the touch screen.

Based on the above, the method for operating a navigation apparatus, the navigation apparatus, and the computer program product detect the object in front of the touch screen through increasing the sensitivity of the touch screen when the mobile device enters a navigation mode. Accordingly, based on the moving direction of the object, a window is opened, switched, or closed on the navigation frame, thus providing users with ease to operate functions of the navigation apparatus on the navigation frame.

In order to make the aforementioned and other features and advantages of the present invention more comprehensible, examples accompanying figures are described in detail below.

### BRIEF DESCRIPTION OF THE DRAWINGS

The accompanying drawings are included to provide a further understanding of the present invention, and are incorporated in and constitute a part of this specification. The drawings illustrate examples of the present invention and, together with the description, serve to explain the principles of the present invention.

FIG. 1 is a block diagram of a navigation apparatus according to an example of the present invention.

FIG. 2 is a flowchart showing the method for operating the navigation apparatus in a navigation mode according to an example of the present invention.

FIG. 3 is a flowchart showing the method for operating the navigation apparatus in a navigation mode according to an example of the present invention.

FIGs. 4(a) to 4(d) show an example of a method for operating the navigation apparatus according to an example of the present invention.

FIGs. 5(a) to 5(c) show an example of a method for operating the navigation apparatus according to an example of the present invention.

### DESCRIPTION OF EXAMPLES

When entering a navigation mode, the mobile device of the present invention not only displays a navigation frame, but also increases a sensitivity of the touch screen to enable the touch screen to detect an approaching gesture or a waving gesture of a user in front of the touch screen. The mobile device also opens, switches, or closes a window according a moving direction of the gesture. Therefore, the present invention may provide users with a convenient and intuitive way to operate functions of the navigation apparatus on the navigation frame without affecting the safety for driving.

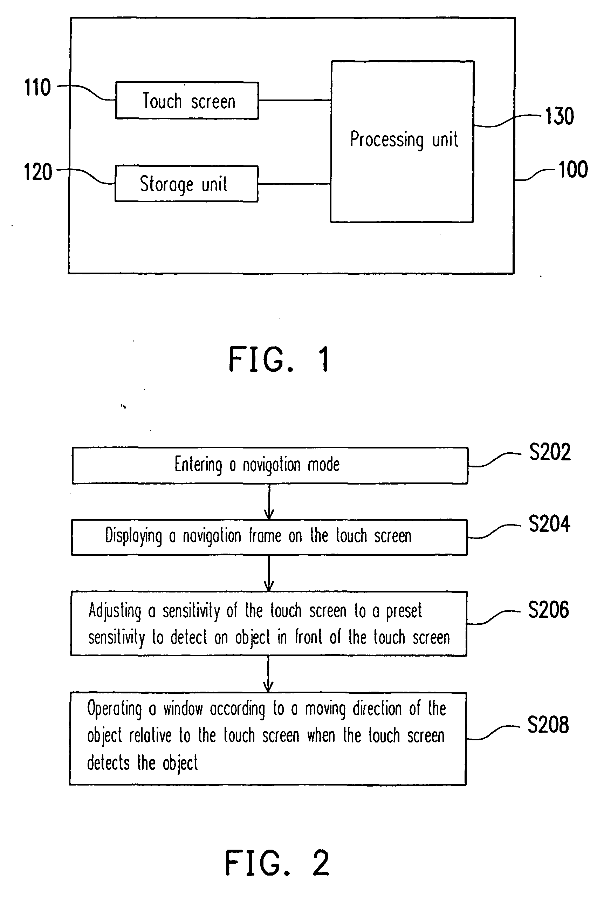

FIG. 1 is a block diagram of a navigation apparatus according to an example of the present invention. Referring to FIG. 1, the navigation apparatus 100 comprises a touch screen 110, a storage unit 120, and a processing unit 130, and is able to perform operations on a navigation frame according to a gesture of a user in front of the touch screen when entering a navigation mode and displaying the navigation frame. The navigation apparatus 100 is a mobile device such as a mobile phone, a smartphone, a personal digital assistance (PDA), a PDA phone, a car PC, a notebook, a multimedia player, or a handheld game device, which is not limited thereto. The functions of aforesaid elements are respectively illustrated as follows.

The touch screen 110 is, for example, a surface capacitive touch (SCT) screen or a projected capacitive touch (PCT) screen, and a sensitivity of the touch screen 110 may be adjusted to extend its detecting range to the front of its surface without being limited to physically touching the surface. The sensitivity of the touch screen 110 may be adjusted, for example, through adjusting a signal-to-noise ratio (SNR) of the touch screen 110. Accordingly, the touch screen 110 is able to detect an object (e.g. conductive object) appeared within a certain distance in front of its surface.

The storage unit 120 is, for example, any one of a fixed or non-fixed random access memory (RAM), a read-only memory (ROM), a flash memory, a hard disk, or other similar devices or a combination of those devices, and is used for storing an electronic map for navigation. Alternatively, the electronic map may be an electronic map in the internet or an electronic map for online navigation, and is temporarily stored in the storage unit 120.

The processing unit 130 is, for example, a central processing unit (CPU), or other programmable ordinarily-used or specifically-used microprocessor, digital signal processor (DSP), programmable controller, application specific integrated circuit (ASIC), programmable logic device (PLD), or other similar devices or a combination of those devices.

The processing 130 is coupled to the touch screen 110 and the storage unit 120, and is used for detecting an approaching gesture or a waving gesture of a user in front of the touch screen 110 and accordingly displaying or switching a window on the navigation frame. Examples are given below for illustrating detailed steps of the method for operating the navigation apparatus.

FIG. 2 is a flowchart showing the method for operating the navigation apparatus in a navigation mode according to an example of the present invention. Referring to FIG. 2, the method of the example is suitable for the navigation apparatus 100 in FIG. 1 and detailed steps of the navigation apparatus operating method of the present invention are described in detail below with reference to the aforesaid elements of the navigation apparatus 100.

When the navigation apparatus 100 receives an instruction for selecting a navigation function from a user, the processing unit controls the navigation apparatus 100 to enter a navigation mode (step S202) and displaying a navigation frame on the touch screen 110 (step S204). The navigation apparatus 100, for example, detects a current location thereof by using a positioning unit (not shown), receives a start point and an end point input by the user by using the touch screen 110, and plans a navigation route according the start point and the end point by using the processing unit 130. Then, the processing unit 130 accesses the storage unit 120 to obtain an electronic map nearby the navigation route and finally marks the navigation route on the electronic map to generate the navigation frame.

In detail, the aforesaid start point is, for example, the current location of the navigation apparatus 100 detected by the positioning unit (not shown), a location corresponding to a coordinate or an address input by the user, or a point of interest (POI) selected from a POI list by the user. The end point is, for example, a location corresponding to the coordinate or the address input by the user or a POI selected from a POI list by the user, which is not limited herein. The positioning unit (not shown) is, for example, a global positioning system (GPS), or other communication systems using a global system for mobile communication (GSM) system, a personal handy-phone system (PHS), a code division multiple access (CDMA) system, a wireless fidelity (Wi-Fi) system, a worldwide interoperability for microwave access (WiMAX) system, a radio repeater, or a radio broadcaster for positioning, and is used for obtaining the current location of the navigation apparatus 100.

The navigation apparatus 100, for example, displays the navigation frame in a full-screen mode when entering the navigation mode. To provide the user with ease to operate the navigation apparatus 100 without watching the touch screen 110, when the navigation apparatus 100 displays the navigation frame, the processing unit 130 adjusts the sensitivity of the touch screen 110 from an original sensitivity to a preset sensitivity, so as to enable the touch screen to detect the object in front of the surface thereof (step S206). That means when the sensitivity of the touch screen 110 is kept in the original sensitivity, the user has to touch the touch screen 110 so as to operate the navigation apparatus 100; when the sensitivity of the touch screen is adjusted to the preset sensitivity, the user may operate the touch screen 110 without directly touching the touch screen 110. The aforesaid preset sensitivity is higher than the original sensitivity of the touch screen 110, such that a detecting range of the touch screen 110 may be extended from its surface to a certain distance in front of its surface. In one example, if the touch screen 110 is a capacitive touch screen, the aforesaid sensitivity is, for example, a noise or a SNR of the touch screen 110. When the navigation apparatus 100 increases the noise of the touch screen 110 or reduces the SNR of the touch screen 110, the touch screen 110 is able to extend its detecting range to a certain distance in front of its surface.

In detail, after adjusting the sensitivity of the touch screen 110, the processing unit 130, for example, detects a capacitance of each of the touch points in the touch screen 110 and determines whether there is an object in front of the touch screen 110 according to a variation of the capacitance of each of the touch points. The processing unit 130, for example, compares the variation of each touch point within a unit of time with a variation threshold, so as to determine whether an object is existed. If the variation of the touch point is larger than or equal to the variation threshold, the processing unit 130 determines that there is an object in front of the touch point of the touch screen 110. On the contrary, if the variation of the touch point is less than the variation threshold, the processing unit 130 determines there is no object in front of the touch point of the touch screen 110.

When the touch screen detects the object, the processing unit 130 displays a window on the navigation frame according to a moving direction of the object relative to the touch screen (step S208). The method that the processing unit 130 detects the object is, for example, to calculate a distance between the touch point and the object according to the capacitance of each of the touch points, and collects all the distance data between the touch points and the object, so as to predict the location of the object in front of the touch screen 110.

In addition, the processing unit 130 may further determine a moving direction of the object relative to the touch screen 110 according to a variation of the distance between each touch point and the object. When the object is determined to be moved in a first direction perpendicular to the touch screen 110, the processing unit 130 accordingly opens and displays a window (e.g. an operation window or a browsing window) on the navigation frame, in which the first direction is, for example, a direction toward the touch screen 110.

In detail, according to the operation habit of users, the simplest and most intuitive way is to approach the screen by a finger. Therefore, after increasing the sensitivity of the touch screen 110, the navigation apparatus 100 of the present invention is able to detect the "approaching gesture" of the user, so as to open the window on the navigation frame displayed by the touch screen 110 and provide the same for the user to perform subsequent operations. Specifically, besides approaching the screen by the finger, the user may also approach the screen by the palm of the hand to make the approaching gesture, which is not limited herein.

It should be noted herein that since the gesture of the user is not always moved in the direction exactly perpendicular to the touch screen, the first direction perpendicular to the touch screen 110 described herein only indicates an approximate direction and may tolerate certain deviation. Once the portion of the movement of the object in the direction perpendicular to the touch screen 110 is larger than a certain value, it is determined that the object is moved in the direction perpendicular to the touch screen 110.

Beside the aforesaid direction perpendicular to the touch screen 110, the present invention also combines other gestures of the user in front of the touch screen 110, so as to provide functions such as opening, switching, returning, or closing a window; opening, entering, switching, returning, or closing a menu; or executing an instruction. Examples are given below for further illustration.

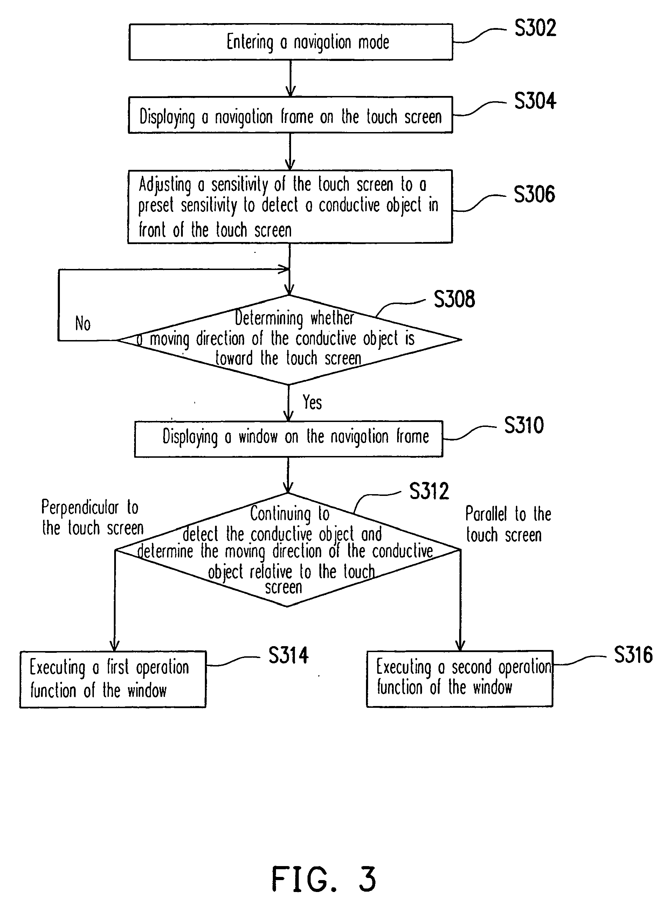

FIG. 3 is a flowchart showing the method for operating the navigation apparatus in a navigation mode according to an example of the present invention. Referring to FIG. 3, the method of the example is suitable for the navigation apparatus 100 in FIG. 1 and detailed steps of the navigation apparatus operating method of the present invention are described in detail below with reference to the aforesaid elements of the navigation apparatus 100.

When the navigation apparatus 100 receives an instruction of a user for selecting the navigation function, the processing unit 130 controls the navigation apparatus 100 to enter a navigation mode (step S302) and to display a navigation frame on the touch screen 110 (step S304). When the navigation apparatus 100 displays the navigation frame, the processing unit 130 adjusts a sensitivity of the touch screen 110 to a preset sensitivity to enable the touch screen 110 to detect a conductive object in front of the surface thereof (step S306). The detailed content of the above steps S302-S306 are all identical or similar to the steps S202-S206 in the above example, and will not be described herein.

The difference between the present example and the previous example is that, in the present example, when an conductive object is detected by the touch screen 110 of the navigation apparatus, the processing unit 130 further determines whether a moving direction of the conductive object is toward the touch screen 110 (step S308). If the moving direction of the conductive object is not toward the touch screen 110, the processing unit performs no actions but keeps detecting the moving direction of the object (step S306); on the contrary, if the moving direction of the object is toward the touch screen 110, the processing unit 130 displays a window on the navigation frame (step S310).

After displaying the window, the navigation apparatus 100 still keeps detecting the object by using the touch screen 110, and the processing unit 130 determines the moving direction of the conductive object relative to the touch screen 110 (step S312). When the conductive object is moved in a first direction perpendicular to the touch screen 110, the processing unit 130 executes a first operation function of the window (step S314). When the conductive object is moved in a second direction parallel to the touch screen, the processing unit 130 executes a second operation function of the window (step S316). In detail, to precisely determine the gesture made by the user, the present example only classifies the gestures of the user into an approaching gesture and a waving gesture, in which the two kinds of gestures are corresponding to different operation functions.

For example, the window displayed on the navigation frame by the processing unit 130 is a menu having at least one item. If the menu comprises more than one item, one of the items (e.g. a first item in the menu or an item selected before the menu is closed for the last time) is marked to represent a currently selected item according to a setting of the navigation apparatus 100. In another example, the window displayed on the navigation frame by the processing unit 130 may comprise only a current item of the at least one item of the menu, which is not limited thereto.

When the user performs the gesture in front of the touch screen 110 again, the processing unit 130 determines whether to execute a function corresponding to the current item or switch to a next item according to the moving direction of the gesture, and if the menu comprises another layer of menu under the current item, the processing unit 130 displays a submenu of the current item. For example, when the user's gesture is moved by means of approaching the touch screen 110, the processing unit 130 executes a function corresponding to the current item or displays the submenu in a next layer of the current item, and when the user's gesture is moved in a direction parallel to the touch screen 110 (e.g. a specific direction such as a direction from left to right, from right to left, from up to down, from down to up, or from lower right to upper left; or any direction parallel to the touch screen 110.), the processing unit 130 switches the currently marked item to a next item.

Through aforesaid operation method, the user may operating a function of the navigation apparatus 100 on the navigation frame through waving finger or palm in front of the touch screen 110 without physically touching the touch screen 110 or touching specific keys displayed on the touch screen 110. When opening or switching the window, the navigation apparatus 100 may also send a voice message to inform the user of the currently opened menu or currently selected item. Accordingly, the user may operate the function of the navigation apparatus 100 on the navigation frame without watching the touch screen 110, so as to prevent the danger raised due to the distraction resulting from watching the screen.

It should be noted herein that, in the present example, a return item and an exit item may be further defined in the menu displayed by the navigation apparatus 100, such that the user may control the navigation apparatus 100 to switch to the return item or the exit item through a waving gesture, control the navigation apparatus 100 to execute the return item to return to a previous menu of a multi-layered menu through an approaching gesture, or control the navigation apparatus 100 to execute the exit item to close the menu through the approaching gesture. In addition, after displaying the window, the navigation apparatus 100 may accumulate a lasting time for displaying the window and compare the accumulated lasting time with a time threshold. When the lasting time exceeds the time threshold, the processing unit 130 closes the window so as to resume the originally displayed navigation frame. The aforesaid operating means may be set or disposed by the user or the designer of the navigation apparatus 100, which is not limited by the present invention.

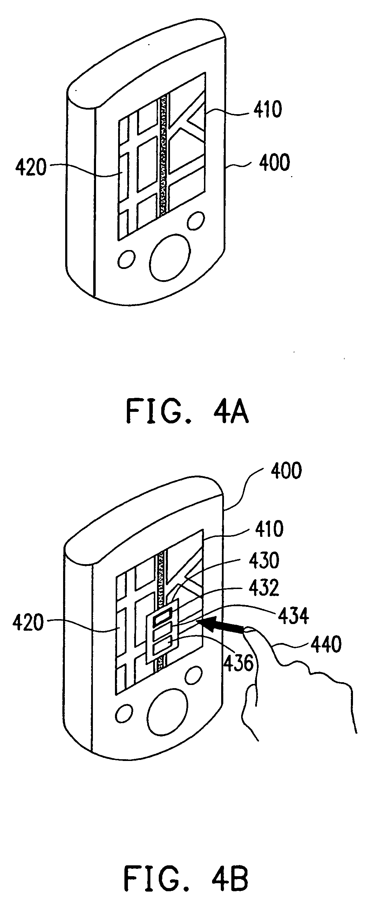

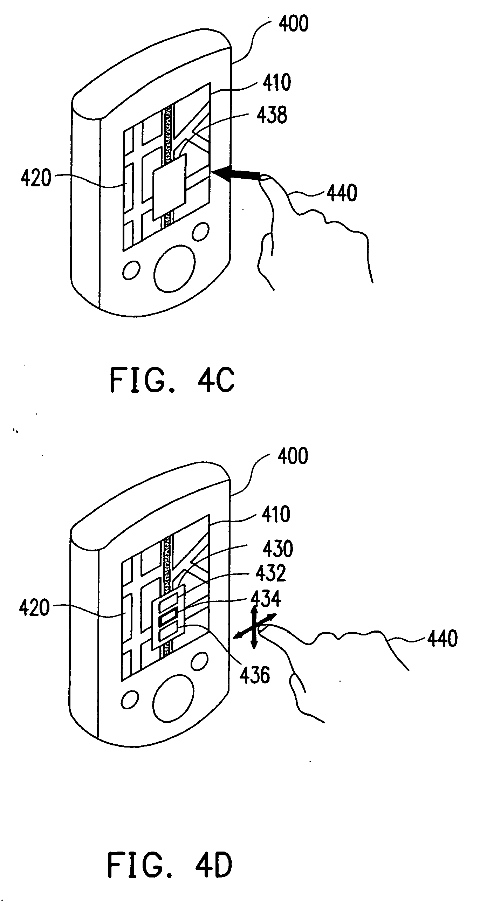

For example, FIGs. 4(a) to 4(d) show an example of a method for operating the navigation apparatus according to an example of the present invention. In the present example, the navigation apparatus 400 displays the navigation frame 420 (as shown in FIG. 4(a)) on the touch screen 410 in a full-screen mode when entering the navigation mode. At this moment, if the user makes a gesture of approaching the touch screen 410 with finger 440, the navigation apparatus 400 may open a menu 430 (as shown in FIG. 4(b)) on the navigation frame 420. The menu 430 comprises items 432, 434, and 436, and the item 432 is marked by a thick frame to represent a preset item. At this moment, if the user makes a gesture of approaching the touch screen 410 with his finger 440 again (as shown in FIG. 4(c)), the navigation apparatus 400 executes a function corresponding to the item 432 such as opening a submenu of the item 432. On the other hand, if the user makes a gesture of waving in a direction parallel to the touch screen 410 with finger 440 (as shown in FIG. 4(d)), the navigation apparatus switches the marked item from the item 432 to the item 434.

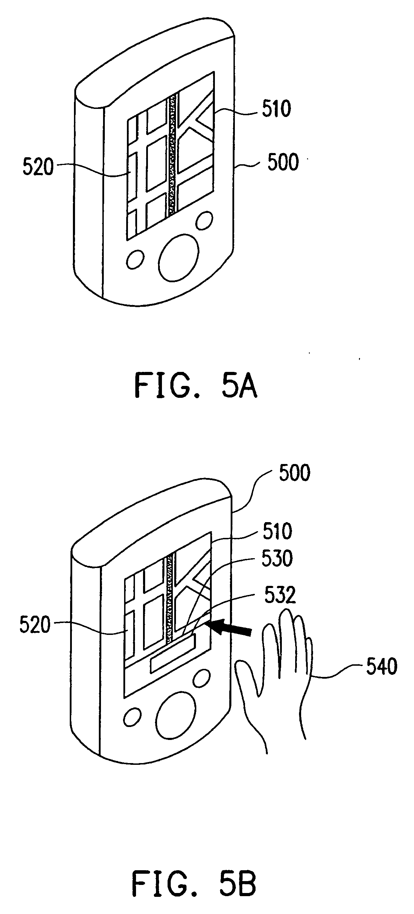

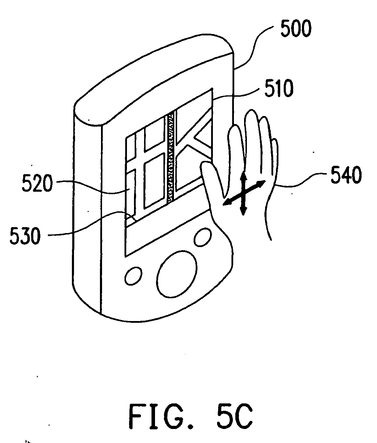

On the other hand, FIGs. 5(a) to 5(c) show an example of a method for operating the navigation apparatus according to an example of the present invention. In the present example, the navigation apparatus 500 displays the navigation frame 520 (as shown in FIG. 5(a)) on the touch screen 510 in a full-screen mode when entering the navigation mode. At this moment, if the user makes a gesture of approaching the touch screen 110 with palm 540, the navigation apparatus 500 may open a menu 530 in a lower part of the navigation frame 520 (as shown in FIG. 5(b)), in which the menu 530 comprises an item 532. At this moment, if the user makes a gesture of approaching the touch screen 510 with palm 540 again, the navigation apparatus 500 opens a submenu 534 of the item 532 (as shown in FIG. 5(c)).

The aforesaid examples summarize a manner that a user opens a window on the navigation frame and performs an operation on the window, which is suitable for the operation actively performed by the user. However, in another example, the navigation apparatus 100 may automatically opens the window on the navigation frame when receiving an incoming call, a short message, or an email from the outside. At this moment, the user may also take use of a method similar to the operating method as described in above examples, so as to perform operation on the window opened by the navigation apparatus 100, such that the effectiveness of touchless operation of the present invention may be achieved. For example, when the navigation apparatus receives an incoming call from outside, if the user makes a gesture of approaching the touch screen, then the call is answered; on the other hand, if the user makes a gesture of waving in a direction parallel to the touch screen, the call is hanged up. Further, when the navigation apparatus receives a short message or an email from outside, if the user makes a gesture of approaching the touch screen, then the new short message or the new email is read; on the other hand, if the user makes a gesture of waving in a direction parallel to the touch screen, a next short message or a next email is read, or an exit item is executed so as to close the function of reading the short message or the email.

The present invention further provides a computer program product which comprises a computer program to be loaded into a mobile device to execute the method for operating a navigation apparatus as described above. The computer program is composed of a plurality of program instructions (for example, an organization chart establishing program instruction, a table approving program instruction, a setting program instruction, and a deployment program instruction, etc), and these program instructions are loaded into the mobile device and executed by the same to accomplish various steps in the method for operating a navigation apparatus and various functions of the navigation apparatus described above.

To sum up, the method for operating the navigation apparatus, the navigation apparatus, and the computer program product of the present invention provide an intuitive and convenient way for the user to operate the navigation apparatus under the condition that the user activates the navigation function but has no time to watch the screen. The present invention may open a window or execute a function of an item by detecting an approaching gesture of the user's finger or palm; and switch among the items of a menu by detecting a waving gesture of the user's finger or palm. Accordingly, the present invention provides users with ease to operate the navigation apparatus on the navigation frame without watching the screen, so as to prevent from the danger caused by watching the screen while driving.

Although the present invention has been described with reference to the above examples, it will be apparent to one of the ordinary skill in the art that modifications to the described example may be made without departing from the scope of the present invention as defined by the attached claims.

## Claims

1. A method for operating a navigation apparatus (100, 400), suitable for a mobile device having a touch screen, the method comprising:
entering (S202) a navigation mode;
displaying (S204) a navigation frame (420) on the touch screen (110, 410);
adjusting (S206) a sensitivity of the touch screen (110, 410) to a preset sensitivity to detect an object in front of the touch screen (110, 410), wherein the preset sensitivity is higher than an original sensitivity of the touch screen (110, 410); and
operating (S208) a window according to a moving direction of the object relative to the touch screen (110, 410) when the touch screen (110, 410) detects the object,
**characterized in that** the step of operating the window according to the moving direction of the object relative to the touch screen (110, 410) comprises:
continuing (S312) to detect the object and determine the moving direction of the object relative to the touch screen (110, 410);
executing (S314) a first operation function of the window when the object is moved in the first direction perpendicular to the touch screen (110, 410); and
executing (S316) a second operation function of the window when the object is moved in a second direction parallel to the touch screen (110, 410).

2. The method of claim 1, wherein the step of adjusting the sensitivity of the touch screen (110, 410) to the preset sensitivity to detect the object in front of the touch screen (110, 410) comprises:
adjusting a signal-to-noise ratio (SNR) of the touch screen (110, 410) to enable the touch screen (110, 410) to detect the object in front of the touch screen (110, 410).

3. The method of claim 1 or 2, wherein the step of detecting the object in front of the touch screen (110, 410) comprises:
detecting a capacitance of each of a plurality of touch points in the touch screen (110, 410);
comparing a variance of the capacitance of each of the touch points within a unit of time with a variance threshold;
determining there is an object in front of the touch point of the touch screen (110, 410) if the variance of the touch point is larger than or equal to the variance threshold; and
determining there is no object in front of the touch point of the touch screen (110, 410) if the variance of the touch point is less than the variance threshold.

4. The method of claim 3, wherein the step of operating the window according to the moving direction of the object relative to the touch screen (110, 410) comprises:
calculating a distance between the object in front of the touch point of the touch screen (110, 410) and the touch point according to the capacitance of each of the touch points;
determining (S308) the moving direction of the object relative to touch screen (110, 410) according to a variance of the distance between the object and each of the touch points;
opening (S310) the window on the navigation frame (420) when the object comprises moving in a first direction perpendicular to the touch screen (110, 410);
continuing (S312) to detect the object and determine the moving direction of the object relative to the touch screen (110, 410);
executing (S314) a first operation function of the window when the object is moved in the first direction perpendicular to the touch screen (110, 410); and
executing (S316) a second operation function of the window when the object is moved in a second direction parallel to the touch screen (110, 410).

5. The method of claim 1, wherein the window comprises a menu (430, 530) having at least one item (432, 434, 436, 532) and only a current item (532) in the at least one item (432, 434, 436, 532) is displayed in the window.

6. A computer program product, comprising instructions for being loaded into a mobile device to enable the mobile device to execute the method for operating a navigation apparatus of any one of claim 1 to 5.

7. A navigation apparatus, comprising:
a touch screen (110, 410), having a sensitivity, for displaying a navigation frame (420);
a storage unit (120), for storing an electronic map; and
a processing unit (130), coupled to the touch screen (110, 410) and the storage unit (120), confugured for displaying the navigation frame (420) on the touch screen (110, 410) when a navigation mode is entered and adjusting the sensitivity of the touch screen (110, 410) to a preset sensitivity to detect an object in front of the touch screen (110, 410), wherein the preset sensitivity is higher than an original sensitivity of the touch screen (110, 410), and operating a window according to a moving direction of the object relative to the touch screen (110, 410) when the touch screen (110, 410) detects the object;
**characterized in that**
the processing unit (130) is configured to execute a first operation function of the window when determining that the object is moved in a first direction perpendicular to the touch screen (110, 410), and to execute a second operation function of the window when determining that the object is moved in a second direction parallel to the touch screen (110, 410).

8. The navigation apparatus of claim 7, further comprising:
a positioning unit, for detecting a current location of the navigation device, wherein
the processing unit (130) is configured to plan a navigation route by using the current location detected by the positioning unit as a start point and using the destination received by the touch screen (110, 410) as an end point, to access the electronic map nearby the navigation route, and to mark the navigation route on the electronic map so as to generate the navigation frame (420).

9. The navigation apparatus of claim 7 or 8, wherein the processing unit (130) is configured to adjust a SNR of the touch screen (110, 410) to enable to the touch screen (110, 410) to detect the object in front of the touch screen (110, 410).

10. The navigation apparatus of any one of claims 7 to 9, wherein the processing unit (130) is adapted to detect a capacitance of each of a plurality of touch points in the touch screen (110, 410), to compare a variance of the capacitance of each of the touch points within a unit of time with a variance threshold, to determine that there is an object in front of the touch point of the touch screen (110, 410) if the variance of the touch point is larger than or equal to the variance threshold, and to determine that there is no object in front of the touch point of the touch screen (110, 410) if the variance of the touch point is less than the variance threshold.

11. The navigation apparatus of claim 10, wherein the processing unit (130) is adapted to calculate a distance between the object in front of the touch point of the touch screen (110, 410) and the touch point according to the capacitance of each of the touch points, and to open the window on the navigation frame (420) when the object comprises moving in a first direction perpendicular to the touch screen (110, 410).

12. The navigation apparatus any one of claims 7 to 11, wherein the window comprises a menu (430, 530) having at least one item (432, 434, 436, 532); and wherein the processing unit (130) is configured to execute a function of a current item (432) in the menu (430, 530) or to display a submenu (438, 534) of the current item (432) when determining that the object moves in the first direction perpendicular to the touch screen (110, 410), and to switch the current item (432) to a next item (434) in the at least one item (432, 434, 436, 532) when determining that the object is moved in the second direction parallel to the touch screen (110, 410).

13. The navigation apparatus of any one claims 7 to 12, wherein after displaying the window, the processing unit (130) further is adapted to accumulate a lasting time of displaying the window, to compare the lasting time with a time threshold, and to close the window when determining the lasting time exceeds the time threshold.

## Patentansprüche

1. Verfahren zum Betreiben einer Navigationsvorrichtung (100, 400), das für eine mobile Vorrichtung mit einem Touch-Screen bzw. berührungsempfindlichen Bildschirm geeignet ist, wobei das Verfahren Folgendes aufweist:
Eintreten (S202) in einen Navigationsmodus;
Anzeigen (S204) eines Navigationsrahmens (420) auf dem berührungsempfindlichen Bildschirm (110, 410);
Anpassen (S206) einer Empfindlichkeit des berührungsempfindlichen Bildschirms (110, 410) auf eine voreingestellte Empfindlichkeit, um ein Objekt vor dem berührungsempfindlichen Bildschirm (110, 410) zu detektieren, wobei die voreingestellte Empfindlichkeit höher als eine ursprüngliche Empfindlichkeit des berührungsempfindlichen Bildschirms (110, 410) ist; und
Bedienen (S208) eines Fensters gemäß einer Bewegungsrichtung des Objekts relativ zu dem berührungsempfindlichen Bildschirm (110, 410), wenn der berührungsempfindliche Bildschirm (110, 410) das Objekt detektiert,
**dadurch gekennzeichnet, dass** der Schritt des Bedienens des Fensters gemäß der Bewegungsrichtung des Objekts relativ zu dem berührungsempfindlichen Bildschirm (110, 410) Folgendes aufweist:
Fortsetzen (S312) des Detektieren des Objekts und Bestimmen der Bewegungsrichtung des Objekts relativ zu dem berührungsempfindlichen Bildschirm (110, 410);
Ausführen (S314) einer ersten Betriebsfunktion des Fensters, wenn das Objekt in der ersten Richtung senkrecht zu dem berührungsempfindlichen Bildschirm (110, 410) bewegt wird; und
Ausführen (S316) einer zweiten Betriebsfunktion des Fensters, wenn das Objekt in einer zweiten Richtung parallel zu dem berührungsempfindlichen Bildschirm (110, 410) bewegt wird.

2. Verfahren gemäß Anspruch 1, wobei der Schritt des Anpassens der Empfindlichkeit des berührungsempfindlichen Bildschirms (110, 410) auf die voreingestellte Empfindlichkeit, um das Objekt vor dem berührungsempfindlichen Bildschirm (110, 410) zu detektieren, Folgendes aufweist:
Anpassen eines Signal-zu-Rausch-Verhältnisses (SNR) des berührungsempfindlichen Bildschirms (110, 410), um es zu ermöglichen, dass der berührungsempfindliche Bildschirm (110, 410) das Objekt vor dem berührungsempfindlichen Bildschirm (110, 410) detektiert.

3. Verfahren gemäß Anspruch 1 oder 2, wobei der Schritt des Detektierens des Objekts vor dem berührungsempfindlichen Bildschirm (110, 410) Folgendes aufweist:
Detektieren einer Aufnahmefähigkeit bzw. Kapazitanz von jedem einer Vielzahl von Berührungspunkten in dem berührungsempfindlichen Bildschirm (110, 410);
Vergleichen einer Varianz der Kapazitanz von jedem der Berührungspunkte innerhalb einer Zeiteinheit mit einem Varianzschwellenwert;
Bestimmen, dass ein Objekt vor dem Berührungspunkt des berührungsempfindlichen Bildschirms (110, 410) ist, wenn die Varianz des Berührungspunkts größer als der Varianzschwellenwert ist oder diesem entspricht; und
Bestimmen, dass ein Objekt vor dem Berührungspunkt des berührungsempfindlichen Bildschirms (110, 410) ist, wenn die Varianz des Berührungspunkts geringer als der Varianzschwellenwert ist.

4. Verfahren gemäß Anspruch 3, wobei der Schritt des Betätigens des Fensters gemäß der Bewegungsrichtung des Objekts relativ zu dem berührungsempfindlichen Bildschirm (110, 410) Folgendes aufweist:
Berechnen einer Entfernung zwischen dem Objekt vor dem Berührungspunkt des berührungsempfindlichen Bildschirms (110, 410) und dem Berührungspunkt gemäß der Kapazitanz von jedem der Berührungspunkte;
Bestimmen (S308) der Bewegungsrichtung des Objekts relativ zu dem berührungsempfindlichen Bildschirm (110, 410) gemäß einer Varianz der Entfernung zwischen dem Objekt und jedem der Berührungspunkte;
Öffnen (S310) des Fensters auf dem Navigationsrahmen (420), wenn sich das Objekt in einer ersten Richtung senkrecht zu dem berührungsempfindlichen Bildschirm (110, 410) bewegt;
Fortsetzen (S312) des Detektierens eines Objekts und Bestimmen der Bewegungsrichtung des Objekts relativ zu dem berührungsempfindlichen Bildschirm (110, 410);
Ausführen (S314) einer ersten Betriebsfunktion des Fensters, wenn das Objekt in der ersten Richtung senkrecht zu dem berührungsempfindlichen Bildschirm (110, 410) bewegt wird; und
Ausführen (S316) einer zweiten Betriebsfunktion des Fensters, wenn das Objekt in einer zweiten Richtung parallel zu dem berührungsempfindlichen Bildschirm (110, 410) bewegt wird.

5. Verfahren gemäß Anspruch 1, wobei das Fenster ein Menü (430, 530) mit zumindest einem Element (432, 434, 436, 532) aufweist und nur ein aktuelles Element (532) in dem zumindest einen Element (432, 434, 436, 532) in dem Fenster angezeigt wird.

6. Computerprogrammprodukt, das Anweisungen aufweist, die in eine mobile Vorrichtung geladen werden sollen, um es zu ermöglichen, dass die mobile Vorrichtung das Verfahren zum Betreiben einer Navigationsvorrichtung gemäß einem der Ansprüche 1 bis 5 ausführt.

7. Navigationsvorrichtung, die Folgendes aufweist:
einen berührungsempfindlichen Bildschirm (110, 410), der eine Empfindlichkeit zum Anzeigen eines Navigationsrahmens (420) aufweist;
eine Speichereinheit (120) zum Speichern einer elektronischen Karte; und
eine Verarbeitungseinheit (130), die mit dem berührungsempfindlichen Bildschirm (110, 410) und der Speichereinheit (120) gekoppelt ist, die konfiguriert ist, um den Navigationsrahmen (420) auf dem berührungsempfindlichen Bildschirm (110, 410) anzuzeigen, wenn in einen Navigationsmodus eingetreten wird, und um die Empfindlichkeit des berührungsempfindlichen Bildschirms (110, 410) auf eine voreingestellte Empfindlichkeit anzupassen, um ein Objekt vor dem berührungsempfindlichen Bildschirm (110, 410) zu detektieren, wobei die voreingestellte Empfindlichkeit höher als eine ursprüngliche Empfindlichkeit des berührungsempfindlichen Bildschirms (110, 410) ist, und um ein Fenster gemäß einer Bewegungsrichtung des Objekts relativ zu dem berührungsempfindlichen Bildschirm (110, 410) zu bedienen, wenn der berührungsempfindlichen Bildschirm (110, 410) das Objekt detektiert;
**dadurch gekennzeichnet, dass**
die Verarbeitungseinheit (130) konfiguriert ist, um eine erste Betriebsfunktion des Fensters auszuführen, wenn bestimmt wird, dass das Objekt in einer ersten Richtung senkrecht zu dem berührungsempfindlichen Bildschirm (110, 410) bewegt wird, und um eine zweite Betriebsfunktion des Fensters auszuführen, wenn bestimmt wird, dass sich das Objekt in einer zweiten Richtung parallel zu dem berührungsempfindlichen Bildschirm (110, 410) bewegt.

8. Navigationsvorrichtung gemäß Anspruch 7, die ferner Folgendes aufweist:
eine Positionierungseinheit zum Detektieren einer gegenwärtigen Position der Navigationsvorrichtung, wobei
die Verarbeitungseinheit (130) konfiguriert ist, um eine Navigationsroute zu planen, und zwar durch Verwenden der gegenwärtigen Position, die durch die Positionierungseinheit detektiert wurde als einem Startpunkt und Verwenden des Bestimmungsorts, der durch den berührungsempfindlichen Bildschirm (110, 410) empfangen wurde als einem Endpunkt, um auf die elektronische Karte nahe der Navigationsroute zuzugreifen und um die Navigationsroute auf der elektronischen Karte zu markieren, um den Navigationsrahmen (420) zu erzeugen.

9. Navigationsvorrichtung gemäß Anspruch 7 oder 8, wobei die Verarbeitungseinheit (130) konfiguriert ist, um ein Signal-zu-Rausch-Verhältnis des berührungsempfindlichen Bildschirms (110, 410) anzupassen, um es zu ermöglichen, dass der berührungsempfindlichen Bildschirm (110, 410) das Objekt vor dem berührungsempfindlichen Bildschirm (110, 410) detektiert.

10. Navigationsvorrichtung gemäß einem der Ansprüche 7 bis 9, wobei die Verarbeitungseinheit (130) angepasst ist, um eine Kapazitanz jeder der Vielzahl von Berührungspunkten in dem berührungsempfindlichen Bildschirm (110, 410) zu detektieren, um eine Varianz der Kapazitanz jedes der Berührungspunkte innerhalb einer Zeiteinheit mit einem Varianzschwellenwert zu vergleichen, um zu bestimmen, dass sich ein Objekt vor dem Berührungspunkt des berührungsempfindlichen Bildschirms (110, 410) befindet, wenn die Varianz des Berührungspunkts größer als der Varianzschwellenwert ist oder diesem entspricht, und um zu bestimmen, dass sich kein Objekt vor dem Berührungspunkt des berührungsempfindlichen Bildschirms (110, 410) befindet, wenn die Varianz des Berührungspunkts geringer als der Varianzschwellenwert ist.

11. Navigationsvorrichtung gemäß Anspruch 10, wobei die Verarbeitungseinheit (130) angepasst ist, um eine Entfernung zwischen dem Objekt vor dem Berührungspunkt des berührungsempfindlichen Bildschirms (110, 410) und dem Berührungspunkt gemäß der Kapazitanz von jedem der Berührungspunkte zu berechnen, und um das Fenster auf dem Navigationsrahmen (420) zu öffnen, wenn das Objekt das Bewegen in einer ersten Richtung senkrecht zu dem berührungsempfindlichen Bildschirm (110, 410) aufweist.

12. Navigationsvorrichtung gemäß einem der Ansprüche 7 bis 11, wobei das Fenster ein Menü (430, 530) mit zumindest einem Element (432, 434, 436, 532) aufweist; und wobei die Verarbeitungseinheit (130) konfiguriert ist, um eine Funktion eines aktuellen Elements (432) in dem Menü (430, 530) auszuführen oder ein Untermenü (438, 534) des aktuellen Elements (432) anzuzeigen, wenn bestimmt wird, dass sich das Objekt in der ersten Richtung senkrecht zu dem berührungsempfindlichen Bildschirm (110, 410) bewegt, und um das aktuelle Element (432) zu einem nächsten Element (434) in dem zumindest einen Element (432, 434, 436, 532) umzuschalten, wenn bestimmt wird, dass sich das Objekt in der zweiten Richtung parallel zu dem berührungsempfindlichen Bildschirm (110, 410) bewegt.

13. Navigationsvorrichtung gemäß einem der Ansprüche 7 bis 12, wobei nach dem Anzeigen des Fensters die Verarbeitungseinheit (130) ferner angepasst ist, um ein verbleibende Zeit des Anzeigens des Fensters zusammenzufassen, um die verbleibende Zeit mit einem Zeitschwellenwert zu vergleichen und um das Fenster zu schließen, wenn bestimmt wird, dass die verbleibende Zeit den Zeitschwellenwert überschreitet.

## Revendications

1. Procédé de fonctionnement d'un appareil de navigation (100, 400), approprié pour un dispositif mobile ayant un écran tactile, le procédé comprenant :
l'entrée (S202) d'un mode de navigation ;
l'affichage (S204) d'un cadre de navigation (420) sur l'écran tactile (110, 410) ;
l'ajustement (S206) d'une sensibilité de l'écran tactile (110, 410) à une sensibilité préréglée pour détecter un objet devant l'écran tactile (110, 410), dans lequel la sensibilité préréglée est plus élevée qu'une sensibilité originale de l'écran tactile (110, 410) ; et
le fonctionnement (S208) d'une fenêtre selon une direction de déplacement de l'objet par rapport à l'écran tactile (110, 410) lorsque l'écran tactile (110, 410) détecte l'objet,
**caractérisé en ce que** l'étape de fonctionnement de la fenêtre selon la direction de déplacement de l'objet par rapport à l'écran tactile (110, 410) comprend :
la continuation (S312) pour détecter l'objet et déterminer la direction de déplacement de l'objet par rapport à l'écran tactile (110, 410) ;
l'exécution (S314) d'une première fonction d'opération de la fenêtre lorsque l'objet est déplacée dans la première direction perpendiculaire à l'écran tactile (110, 410) ; et
l'exécution (S316) d'une seconde fonction d'opération de la fenêtre lorsque l'objet est déplacé dans une seconde direction parallèle à l'écran tactile (110, 410).

2. Procédé selon la revendication 1, dans lequel l'étape d'ajustement de la sensibilité de l'écran tactile (110, 410) à la sensibilité préréglée pour détecter l'objet devant l'écran tactile (110, 410) comprend :
l'ajustement d'un rapport signal sur bruit (SNR) de l'écran tactile (110, 410) pour permettre à l'écran tactile (110, 410) de détecter l'objet devant l'écran tactile (110,410).

3. Procédé selon la revendication 1 ou 2, dans lequel l'étape de détection de l'objet devant l'écran tactile (110, 410) comprend :
la détection d'une capacitance de chacun d'une pluralité de points tactiles dans l'écran tactile (110, 410) ;
la comparaison d'une variance à la capacitance de chacun des points tactiles dans une unité de temps avec un seuil de variance ;
la détermination s'il y a un objet devant le point tactile de l'écran tactile (110, 410) si la variance du point tactile est plus grande ou égale au seuil de variance ; et la détermination s'il n'y a pas d'objet devant le point tactile de l'écran tactile (110, 410) si la variance du point tactile est inférieure au seuil de variance.

4. Procédé selon la revendication 3, dans lequel l'étape de fonctionnement de la fenêtre selon la direction de déplacement de l'objet par rapport à l'écran tactile (110,410) comprend :
le calcul d'une distance entre l'objet devant le point tactile de l'écran tactile (110, 410) et le point tactile selon la capacitance de chacun des points tactiles ;
la détermination (S308) de la direction de déplacement de l'objet par rapport à l'écran tactile (110, 410) selon une variance de la distance entre l'objet et chacun des points tactiles ;
l'ouverture (S310) de la fenêtre sur le cadre de navigation (420) lorsque l'objet comprend le déplacement dans une première direction perpendiculaire à l'écran tactile (110, 410) ;
la continuation (S312) de détecter l'objet et déterminer la direction de déplacement de l'objet par rapport à l'écran tactile (110, 410) ;
l'exécution (S314) d'une première fonction d'opération de la fenêtre lorsque l'objet est déplacé dans la première direction perpendiculaire à l'écran tactile (110, 410) ; et
l'exécution (S316) d'une seconde fonction d'opération de la fenêtre lorsque l'objet est déplacé dans une seconde direction parallèle à l'écran tactile (110, 410).

5. Procédé selon la revendication 1, dans lequel la fenêtre comprend un menu (430, 530) ayant au moins un élément (432, 434, 436, 532) et seulement un élément courant (532) dans le au moins un élément (432, 434, 436, 532) est affiché dans la fenêtre.

6. Produit de programme informatique, comprenant des instructions pour être chargées dans un dispositif mobile pour permettre au dispositif mobile d'exécuter le procédé pour le fonctionnement d'un appareil de navigation selon l'une quelconque des revendications 1 à 5.

7. Appareil de navigation, comprenant :
un écran tactile (110, 410), ayant une sensibilité, pour afficher un cadre de navigation (420) ;
une unité de stockage (120), pour stocker une carte électronique ; et
une unité de traitement (130), couplée à l'écran tactile (110, 410) et l'unité de stockage (120), configurée pour afficher le cadre de navigation (420) sur l'écran tactile (110, 410) lorsqu'un mode de navigation est introduit et ajuster la sensibilité de l'écran tactile (110, 410) à une sensibilité préréglée pour détecter un objet devant l'écran tactile (110, 410), dans lequel la sensibilité préréglée est plus élevée qu'une sensibilité originale de l'écran tactile (110, 410), et le fonctionnement d'une fenêtre selon une direction de déplacement de l'objet par rapport à l'écran tactile (110, 410) lorsque l'écran tactile (110, 410) détecte l'objet ;
**caractérisé en ce que**
l'unité de traitement (130) est configurée pour exécuter une première fonction d'opération de la fenêtre lors de la détermination que l'objet est déplacé dans une première direction perpendiculaire à l'écran tactile (110, 410), et pour exécuter une seconde fonction d'opération de la fenêtre lors de la détermination que l'objet est déplacée dans une seconde direction parallèle à l'écran tactile (110, 410).

8. Appareil de navigation selon la revendication 7, comprenant en outre :
une unité de positionnement, pour détecter un emplacement courant du dispositif de navigation, dans lequel
l'unité de traitement (130) est configurée pour planifier une route de navigation en utilisant l'emplacement courant détecté par l'unité de positionnement comme un point de départ et en utilisant la destination reçue par l'écran tactile (110, 410) comme un point d'arrivée, pour accéder à la carte électronique près de la route de navigation, et pour marquer la route de navigation sur la carte électronique afin de générer le cadre de navigation (420).

9. Appareil de navigation selon la revendication 7 ou 8, dans lequel l'unité de traitement (130) est configurée pour ajuster un rapport signal sur bruit de l'écran tactile (110, 410) pour permettre à l'écran tactile (110, 410) de détecter l'objet devant l'écran tactile (110, 410).

10. Appareil de navigation selon l'une quelconque des revendications 7 à 9, dans lequel l'unité de traitement (130) est adaptée pour détecter une capacitance de chacun d'une pluralité de points tactiles dans l'écran tactile (110, 410), pour comparer une variance de la capacitance de chacun des points tactiles dans une unité de temps avec un seuil de variance, pour déterminer qu'il y a un objet devant le point tactile de l'écran tactile (110, 410) si la variance du point tactile est plus grande ou égale au seuil de variance, et pour déterminer qu'il n'y a pas d'objet devant le point tactile de l'écran tactile (110, 410) si la variance du point tactile est inférieure au seuil de variance.

11. Appareil de navigation selon la revendication 10, dans lequel l'unité (130) est adaptée pour calculer une distance entre l'objet devant le point tactile de l'écran tactile (110, 410) et le point tactile selon la capacitance de chacun des points tactiles, et d'ouvrir la fenêtre sur le cadre de navigation (420) lorsque l'objet comprend le déplacement dans une première direction perpendiculaire à l'écran tactile (110, 410).

12. Appareil de navigation selon l'une quelconque des revendications 7 à 11, dans lequel la fenêtre comprend un menu (430, 530) ayant au moins un élément (432, 434, 436, 532) ; et dans lequel l'unité de traitement (130) est configurée pour exécuter une fonction d'un élément courant (432) dans le menu (430, 530) ou pour afficher un sous-menu (438, 534) de l'élément courant (432) lors de la détermination que l'objet se déplace dans la première direction perpendiculaire à l'écran tactile (110, 410), et pour commuter l'élément courant (432) à un élément suivant (434) dans au moins un élément (432, 434, 436, 532) lors de la détermination que l'objet est déplacé dans la seconde direction parallèle à l'écran tactile (110, 410).

13. Appareil de navigation selon l'une quelconque des revendications 7 à 12, dans lequel après l'affichage de la fenêtre, l'unité de traitement (130) est en outre adaptée pour accumuler un temps de durée d'affichage de la fenêtre, pour comparer le temps de durée à un seuil de temps, et pour fermer la fenêtre lors de la détermination que le temps de durée dépasse le seuil de temps.
